(19) Europäisches Patentamt / European Patent Office / Office européen des brevets

(11) **EP 2 860 870 B1**

(12) **EUROPEAN PATENT SPECIFICATION**

(45) Date of publication and mention
of the grant of the patent:
**20.06.2018 Bulletin 2018/25**

(51) Int Cl.:
*H02P 6/182* (2016.01)          *H02P 6/21* (2016.01)
*H02P 21/18* (2016.01)          *H02P 27/08* (2006.01)

(21) Application number: **13188422.3**

(22) Date of filing: **14.10.2013**

(54) **A METHOD FOR STARTING A SENSORLESS PERMANENT MAGNET MOTOR**

VERFAHREN ZUM STARTEN EINES SENSORLOSEN PERMANENTMAGNETMOTORS

PROCÉDÉ DE DÉMARRAGE D'UN MOTEUR À AIMANTS PERMANENTS SANS CAPTEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.04.2015 Bulletin 2015/16**

(73) Proprietor: **Bombardier Transportation GmbH
10785 Berlin (DE)**

(72) Inventors:
• **Galic Johann, Johann
735 31 Surahammar (SE)**
• **Jansson, Magnus
635 36 Kvicksund (SE)**

(74) Representative: **Bjerkéns Patentbyrå KB (Gävle)
Box 1274
801 37 Gävle (SE)**

(56) References cited:
**EP-A1- 2 075 907     EP-A1- 2 573 934**

**Description**

TECHNICAL FIELD OF THE INVENTION AND BACKGROUND ART

The present invention relates to a method for starting a voltage source converter used to convert direct voltage into alternating voltage and by that control electric power supply from a direct voltage link to a sensorless permanent magnet motor in a vehicle. "Sensorless" means in this disclosure that the speed and position of the rotor are not sensed. However, other parameters, such as currents may be measured.

The invention is directed to vehicles of any type driven by a permanent magnet motor, i.e. an electric motor having a rotor provided with permanent magnets defining the poles thereof, such as a bus and a track-bound vehicle, such as a train or subway wagon. The application of the invention to a track-bound vehicle will hereinafter mainly be discussed for illuminating the invention but accordingly not restricting the invention thereto.

"Motor" is here to be interpreted broadly as an electric machine which may of course function as generator when the vehicle is braking and then feed electric power to said direct voltage link and for example further to an electricity supply line.

Such motors have normally a sensor through which the angular position of the rotor may be determined for accurate control of said voltage source converter and by that the motor. However, failure of the operation of such a sensor may occur and the permanent magnet motor will then be sensorless. Known methods for starting such a sensorless permanent magnet motor by starting to control a said voltage source converter connected thereto require that the motor and by that the vehicle is standing still. This means when a vehicle is driving and a sensor used to determine the relative position of a rotor and the stator of a permanent magnet motor thereof fails and the motor turns sensorless, the motor has to be inactive until the vehicle stops, such as for a train at the next station. This is because it is necessary to know the position of the rotor with respect to the stator to start the control of the permanent magnet motor.

Once the rotor of the motor has stopped to rotate such a known method includes the step of signal injection and north pole identification (an algorithm to discern between a north pole and a south pole). It is easy to identify the rotor position by such known methods when the motor is standing still, since this will then result in minor strains on a driving system of the motor (restricted current and torque). However, these methods may not be used to start said control when the rotor of the motor is rotating, which is an operation situation frequently appearing in trains and then possible when there is a sensor functioning correctly.

It has also been suggested to short-circuit the motor by short pulses to identify the position of the rotor. However, such short-circuits are quite risky for large electrical drive systems, such as in trains. They would result in high strains, mechanically upon motor and gears and electrically upon motor and converter.

EP 2 573 934 A1 is occupied with a method of the type identified in the introduction, and the method disclosed therein is based on using a modified PWM for switching the voltage source converter when this is started and it is then changed to normal PWM as soon as this is possible. This way of starting the voltage source converter creates large harmonics making it unsuitable for especially track-bound vehicles.

EP 2 075 907 A1 discloses a control system för a permanent magnet synchronous motor, in which a discharging device is used to decrease the voltage of the direct voltage link.

SUMMARY OF THE INVENTION

The object of the present invention is to provide a method for starting a voltage source converter used to convert direct voltage into alternating voltage and by that to control electric power supply from a direct voltage link to a sensorless permanent magnet motor in a vehicle in a state when a rotor of the motor provided with permanent magnets is rotating being improved with respect to such methods already known.

This object is according to the invention obtained by providing a method according to independent claim 1.

Thus, the invention is based on the knowledge of how a rectifier with rectifying members with the character of a rectifying diode functions combined with a measurement of the voltage of the direct voltage link and the use of a phase locked loop for estimating the stator current angle for calculating the position of the permanent magnets in the rotor with respect to the windings of the stator. This means that the correct position and speed of the rotor are known when the converter is started, so it may be reliably started directly by carrying out a normal PWM. The time needed for obtaining this is then shortened by using a value of the vehicle speed measured as input of the phase locked loop, which shortens the time needed for obtaining an estimated value of the stator current angle. The rectifying use through rotation of the rotor by the rectifying members in the current valves of the converter gives only rise to small well-known harmonics before the converter is started by carrying out normal PWM.

Thus, the invention is based on the idea of identifying the rotor position by the motor current. When the counter electromotive force of the motor is higher than the voltage of the direct voltage link the rectifying members, i.e. normally diodes, start to conduct current when said motor disconnecting members are closed. There will then be no phase shift of the current fed through the diodes and the voltage, and the position of the rotor may then be calculated from the phase angle of the motor current. Thus, said counter electromotive force has to be higher than the voltage of the direct voltage link, which will be the case for higher and intermediate rotational speeds of the motor, but this may also be obtained for lower rotational speeds by lowering the voltage of the direct voltage link sufficiently. Accordingly, the method according to the invention makes it possible to start the control of a sensorless permanent magnet motor when the rotor of the motor is rotating, so that it has not to be waited until the vehicle is stopped.

"Motor disconnecting members" may be any members suitable to be used for connecting and disconnecting the stator windings of the motor to the converter, such as contactors, interrupters and current breakers.

According to an embodiment of the invention step e) comprises a calculation of the angle of the stator current in rotor coordinates as well as said position of the permanent magnets with respect to the windings of the stator as the difference between the stator current angle and the angle of that current in rotor coordinates. Thus, the position of the permanent magnets with respect to stator windings and by that the rotor position is obtained this way.

According to another embodiment of the invention each current valve comprises a semiconductor device in the form of a MOSFET, a JFET or an IGBT and a rectifying member in the form of a diode connected in anti-parallel with said semiconductor device.

According to another embodiment of the invention each current valve comprises a MOSFET or a JFET and said MOSFET or JFET operated as synchronous rectifier comprises said rectifying member.

According to another embodiment of the invention the currents induced in the stator windings are determined by measuring the currents through the current valves.

According to another embodiment of the invention the method is carried out on a driving arrangement configured to generate a traction force of a track-bound vehicle. The present invention is particularly interesting for track-bound vehicles which often may be driven long distances, such as in the order of 100 km, between two consecutive stops.

The invention also relates to a computer program having the features listed in claim 8, a computer program product having the features listed in claim 9, an electronic control unit having the features listed in claim 10 and a vehicle according to claim 11.

Other advantageous features and advantages of the invention appear from the description following below.

BRIEF DESCRIPTION OF THE DRAWINGS

With reference to the appended drawings, below follows a description of an embodiment of the invention cited as an example.

In the drawings:

Fig 1    is a simplified circuit diagram of a permanent motor drive system in a rail vehicle,

Fig 2    is a circuit diagram illustrating a phase locked loop used for carrying out a step of a method according to an embodiment of the invention,

Fig 3    is a vector diagram illustrating the current, voltage and magnetic flux vectors for a method according to the present invention, and

Fig 4    is a principle sketch of an electronic control unit for implementing a method according to the invention.

DETAILED DESCRIPTION OF AN EMBODIMENT OF THE INVENTION

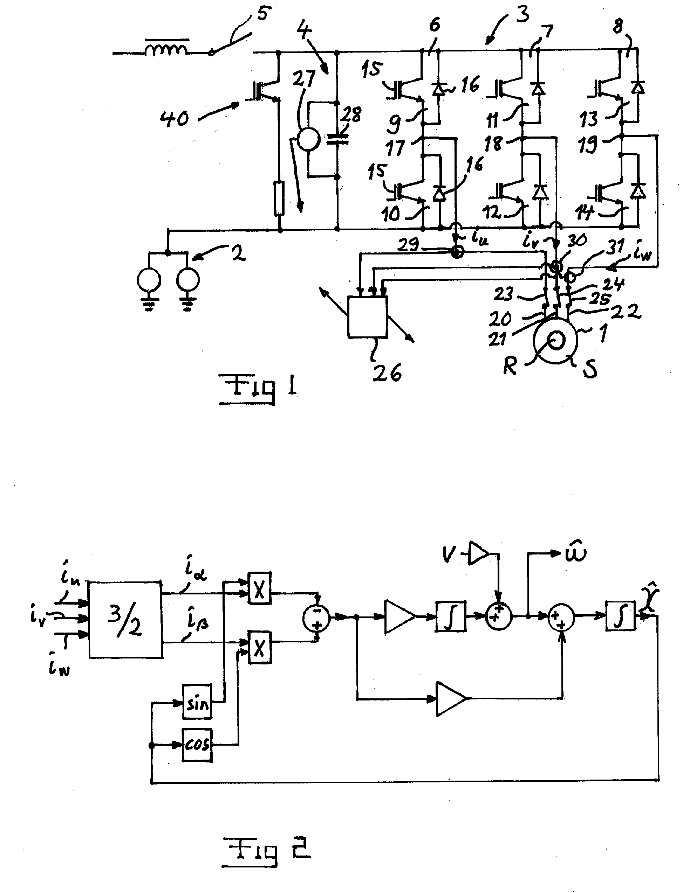

Fig 1 illustrates schematically the arrangement and control of an electric synchronous machine 1 in the form of a permanent magnet motor with a rotor R and a stator S in a track-bound vehicle 2, such as a rail vehicle, for generating a traction force on this vehicle. This vehicle is configured to be connected to a source of electric power and is in this case configured to move along an electric power supply line connected to a direct voltage link 4 through a separation contactor 5.

A converter 3 configured to control the motor by controlling electric power transfer thereto has three phase legs 6-8 each comprising a series connection of at least two current valves 9-14. Each current valve typically comprises a semiconductor switch 15, for instance an IGBT, a MOSFET or a JFET, and a rectifying member 16, here a diode, connected in anti-parallel therewith. When the semiconductor switch 15 is a MOSFET or a JFET it can alternatively be operated as synchronous rectifier and thereby also comprise the rectifying member 16, so that the diode may be omitted.

A midpoint 17-19 between the current valves of each phase leg is connected to a terminal each of the stator S of the motor 1 through a motor disconnecting member 23-25, such as a contactor. Each terminal of the stator is in the case of a Y connected stator connected to one winding and in the case of a delta connected stator connected to a corner point of the delta connection.

A control unit 26 is configured to control the voltage source converter 3 by controlling the semiconductor devices thereof for generating a train of pulses according to a Pulse Width Modulation pattern for delivering a three-phase alternating voltage to the stator windings of the motor for driving the vehicle. The control unit 26 is also configured to control the motor disconnecting members 23-25 as well as the separation contactor 5 connecting the direct voltage link to said source of electric power.

Measuring means to the be used for carrying out a method according to the present invention are a means 27 for measuring the voltage of the direct voltage link defined by the voltage across the capacitor 28 as well as means 29, 30, 31 for stator current measurements. In practice one of the three stator current measurements may be omitted and the corresponding current calculated from the two other. As alternative to current sensors 29, 30, 31 on the motor phase connections the motor phase currents on the alternating voltage side of the converter can be deduced from currents measured by sensors in series with the current valves 9 - 14.

A method according to an embodiment of the invention will now be described while assuming that a sensor for determining the rotor position of the motor 1 has failed and the vehicle is moving, which means that the converter 3 may not be controlled by the control unit 26 to feed electric power to the motor 1.

The contactor 5 will be open and so will the contactors 23-25. The method for starting the position sensorless control of the rotating motor is then started by closing the motor contactors 23-25. If the counter electromotive force created by the rotation of the rotor of the motor is higher than the voltage of the direct voltage intermediate link this will cause currents $i_u$, $i_v$ and $i_w$ to flow from the respective stator winding through the rectifying member 16 of the respective current valve 9-14. This current may then be measured by the means 29, 30 and 31. However, in case no current flows because said counter electromotive force is lower than the voltage of the direct voltage link the control unit 26 controls a brake chopper 40 in parallel with the capacitor 28 constituting the direct voltage link to close for partly discharging this capacitor until a current may be measured by the means 29, 30 and 31.

When this current is measured the voltage $U_{dc}$ of the direct voltage link is then simultaneously measured by the means 27.

The stator frequency $\hat{\omega}$ (motor speed) and the angle of the stator current $\hat{\chi}$ are then estimated by using a phase locked loop (PLL) shown in Fig 2. It is shown how the values of the currents $i_u$, $i_v$ and $i_w$ measured by the means 29-31 are used as input in the PLL as well as the train speed v. $\alpha\beta$ do here stand for a stator fixed coordinate system.

The position of the respective magnet of the rotor of the motor and by that of the rotor with respect to the stator may now be calculated from the stator current angle $\hat{\chi}$. Motor parameters, the stator current and the voltage of the direct voltage link are needed for this.

This calculation is carried out by software in the control unit 26 and may take place as follows:
We do first of all define

Stator fixed coordinate system ($\alpha\beta$)
Rotor fixed coordinate system ($dq$)
Rotor angle (the rotor angular position): $\theta$
Load angle (flux angle in rotor coordinates): $\delta$
Current angle in rotor coordinates: $\alpha$
Current angle in stator fix coordinates: $\chi$
Stator current vector $\bar{i}_s$
Stator current magnitude $\hat{i}_s$
Stator current in rotor coordinates: $(i_d, i_q,)$

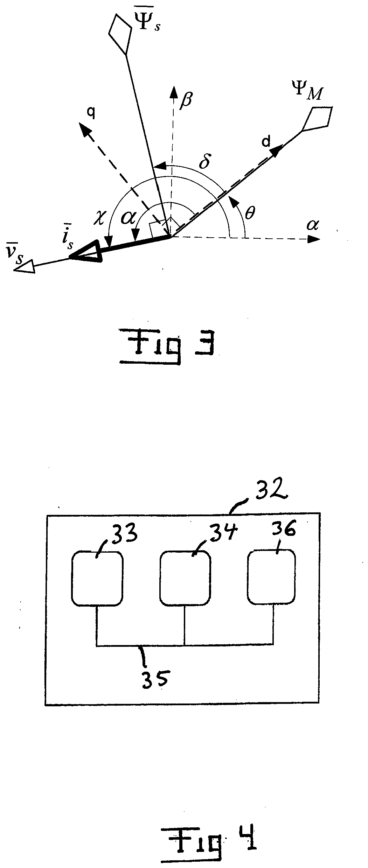

Current, voltage and flux vectors are illustrated in Fig 3.

The applied stator voltage is the six-step voltage

$$(1) \qquad \hat{v}_s = \frac{2}{\pi} U_{dc}$$

and the stator flux is defined as: $\overline{\Psi}_s = \int (\bar{v}_s - R \cdot \bar{i}_s) dt$

With neglected resistance we get the stator flux vector:

$$(2) \qquad \overline{\Psi}_s = \frac{2 \cdot Udc}{j \cdot \pi \cdot \omega} e^{j\theta}$$

where $\theta$ is the rotor position.

The flux magnitude is thus defined by the direct voltage link voltage and the motor speed:

$$(3) \qquad \hat{\Psi}_s = \frac{2 \cdot Udc}{\pi \cdot \omega}$$

In rotor coordinates the flux equations are:

$$(4\ a,b) \qquad \begin{aligned} \Psi_d &= \hat{\Psi}_s \cdot \cos(\delta) = \Psi_M + L_d \cdot i_d \\ \Psi_q &= \hat{\Psi}_s \cdot \sin(\delta) = L_q \cdot i_q \end{aligned}$$

The relation between flux magnitude and current is

$$(5) \qquad \hat{\Psi}_s^{\,2} = \left(\Psi_M + L_d \cdot i_d\right)^2 + \left(L_q \cdot i_q\right)^2$$

The current magnitude is equal in stator and rotor coordinates

$$(6) \qquad \hat{i}_s^{\,2} = i_d^2 + i_q^2$$

Thus the current in rotor coordinates can then be calculated as:

$$(7) \qquad i_d = \frac{\Psi_M \cdot L_d}{\left(L_q^2 - L_d^2\right)} + \frac{\sqrt{\left(\dfrac{L_q^2}{L_q^2 - L_d^2}\right)\hat{\Psi}_M^2 + L_q^2 \cdot \hat{i}_s^2 - \hat{\Psi}_s^2}}{\sqrt{\left(L_q^2 - L_d^2\right)}}$$

$$(8) \qquad i_q = \sqrt{\hat{i}_s^2 - i_d^2}$$

With equation 3 and 7 we then get an expression of the d-current which only is dependent on the motor parameters $L_d$, $L_q$, $\Psi_M$ and the direct voltage link voltage and stator current

$$(9) \qquad i_d = \frac{\Psi_M \cdot L_d}{\left(L_q^2 - L_d^2\right)} + \frac{\sqrt{\left(\dfrac{L_q^2}{L_q^2 - L_d^2}\right)\hat{\Psi}_M^2 + L_q^2 \cdot \hat{i}_s^2 - \dfrac{4}{\pi^2}\dfrac{U_{dc}^2}{\omega^2}}}{\sqrt{\left(L_q^2 - L_d^2\right)}}$$

With known motor parameters and measured direct voltage link voltage and motor current we can then from eq. 9 and 8 calculate the motor current in rotor coordinates $i_d$ and $i_q$.

The current angle is then known as

$$(10) \qquad \alpha = \tan^{-1}\left(\frac{i_d}{i_q}\right)$$

Finally, the rotor position is given as the difference between the stator current angle, the output of the PLL, and the angle of the current in rotor coordinates $\alpha$.

$$(11) \qquad \theta = \chi - \alpha$$

Accordingly, the rotor angular position $\theta$ and the rotor speed are now known and the control unit 26 may now start to control the converter 3 by controlling the semiconductor devices of the current valves thereof so that the permanent magnet motor, operating in generator mode, charges the direct voltage link to the same voltage as the supply line, thereafter close the separation contactor 5 and finally control the converter 3 so that the motor 1 provides the desired driving or braking torque.

Computer program code for implementing a method according to the invention is suitably included in a computer program which is readable into an internal memory of a computer, such as the internal memory of an electronic control unit of a track-bound vehicle being a part of the control unit 26. Such a computer program is suitably provided through a computer program product comprising a data storing medium readable by an electronic unit, which data storing medium has the computer program stored thereon. Said data storing medium is for example an optical data storing medium in the form of a CD-ROM-disc, a DVD-disc, etc., a magnetic data storing medium in the form of a hard disc, a diskette, a tape etc., or a Flash memory or a memory of the type ROM, PROM, EPROM or EEPROM.

Fig 4 illustrates very schematically an electronic control unit 32 comprising an execution means 33, such as a central processor unit (CPU), for executing a computer program. The execution means 33 communicates with a memory 34, for example of the type RAM, through a data bus 35. The control unit 32 comprises also a data storing medium 36, for example in the form of a Flash memory or a memory of the type ROM, PROM, EPROM or EEPROM. The execution means 33 communicates with the data storing medium 36 through a data bus 35. A computer program comprising computer program code for implementing a method according to the invention, for example in accordance with the embodiment disclosed above, is stored on the data storing medium 36.

The invention is of course not in any way restricted to the embodiment described above, but many possibilities to modifications thereof would be apparent to a person with skill in the art without departing from the scope of the invention as defined in the appended claims.

**Claims**

1. A method to start a voltage source converter (3) used to convert direct voltage into alternating voltage and by that to control electric power supply from a direct voltage link (4) to a sensorless permanent magnet motor (1) in a vehicle in a state when a rotor (R) of said motor provided with permanent magnets is rotating, said converter having three phase legs (6-8) each comprising a series connection of at least two current valves (9-14), each comprising a rectifying member (16) with the characater of a rectifying diode, a mid point between said current valves of each phase leg being connected either to a winding each or to the connection point between two windings of a stator (S) of said motor through a motor disconnecting member (23-25), a separation contactor (5) connecting the direct voltage link (4) to an electric power supply being kept open when carrying out the method and the method comprising the following steps:

   a) closing said motor disconnecting members (23-25),
   b) measuring currents on the alternating voltage side of said converter, induced in said stator windings through rotation of the permanent magnet rotor (R) in relation to said stator windings and flowing through the rectifying members (16) of said current valves,
   c) when no current may be measured in step b) lowering the voltage of said direct voltage link (4) by partly discharging at least one capacitor (28) constituting said direct voltage link until currents from said stator windings may be measured,
   d) measuring the voltage of the direct voltage link (4) simultaneously as the measuring of currents induced in the stator windings by rotation of the permanent magnet rotor,
   e) estimating the stator frequency, and by that the speed of said rotor, and the stator current angle by using the values of the currents in the stator windings measured, in which the stator current angle is estimated by using a phase locked loop (PLL) with an input of on one hand said values of the currents in the stator windings and on the other hand of a value of the speed of the vehicle measured,

f) calculating the position of the permanent magnets in said rotor with respect to the windings of the stator by using known parameters in the form of inductance ($L_d$, $L_q$) and magnetic flux ($\Psi_M$) of the motor, the stator current and the voltage of the direct voltage link, and

g) starting the converter (3) by starting to control the current valves (9-14) thereof based on information about the position and speed of the rotor calculated.

2. A method according to claim 1, *characterized* in that step f) comprises a calculation of the angle of the stator current in rotor coordinates as well as said position of the permanent magnets with respect to the windings of the stator as the difference between the stator current angle and the angle of that current in rotor coordinates.

3. A method according to any of the preceding claims, *characterized* in that each current valve comprises a semiconductor device in the form of a MOSFET, a JFET or an IGBT (15) and a rectifying member (16) in the form of a diode connected in anti-parallel with said semiconductor device.

4. A method according to claim 1 or 2, *characterized* in that each current valve comprises a MOSFET or a JFET (15) and that said MOSFET or JFET (15) operated as synchronous rectifier comprises said rectifying member (16).

5. A method according to any of the preceding claims, *characterized* in that the currents induced in the stator windings are determined by measuring the currents through the current valves.

6. A method according to any of the preceding claims, *characterized* in that it is carried out on a driving arrangement configured to generate a traction force of a track-bound vehicle (2).

7. A computer program comprising computer program code for bringing a computer to implement a method according to any of claims 1-6 when the computer program code is executed in the computer.

8. A computer program product comprising a data storing medium readable by a computer, in which the computer program code of a computer program according to claim 7 is stored on the data storing medium.

9. An electronic control unit of a vehicle comprising an execution means, a memory (34) connected to the execution means (33) and a data storing medium (36) connected to the execution means, in which the computer program code of a computer program according to claim 8 is stored on said data storing medium (36).

10. A vehicle, such as a track-bound vehicle, comprising an electronic control unit (32) according to claim 9.

**Patentansprüche**

1. Verfahren zum Starten eines Spannungsquellenkonverters (3), der verwendet wird, um Gleichspannung in Wechselspannung umzuwandeln und dadurch die elektrische Stromversorgung von einer Gleichspannungsverbindung (4) zu einem sensorlosen Permanentmagnetmotor (1) in einem Fahrzeug in einem Zustand zu steuern, wenn sich ein Rotor (R) des Motors dreht, der mit Permanentmagneten versehen ist, wobei der Konverter drei Phasenzweige (6-8) aufweist, die jeweils eine Reihenschaltung von mindestens zwei Stromventilen (9-14) umfassen, von denen jedes ein Gleichrichterelement (16) mit dem Charakter einer Gleichrichterdiode umfasst, wobei ein Mittelpunkt zwischen den Stromventilen jedes Phasenzweigs entweder mit einer Wicklung oder mit dem Verbindungspunkt zwischen zwei Wicklungen eines Stators (S) des Motors durch ein Motortrennelement (23-25) verbunden ist, wobei ein Trennschaltgerät (5), das die Gleichspannungsverbindung (4) mit einer elektrischen Energieversorgung verbindet, offen gehalten wird, wenn das Verfahren ausgeführt wird, wobei das Verfahren die folgenden Schritte umfasst:

a) Schließen der Motortrennelemente (23-25),

b) Messen von Strömen auf der Wechselspannungsseite des Konverters, die in den Wicklungen des Stators durch Drehung des Permanentmagnetrotors (R) in Bezug auf die Wicklungen des Stators induziert werden und durch die Gleichrichterelemente (16) der Stromventile fließen,

c) wenn kein Strom gemessen werden kann in Schritt b), Absenken der Spannung der Gleichspannungsverbindung (4) durch teilweises Entladen von mindestens einem Kondensator (28), der die Gleichspannungsverbindung bildet, bis Ströme von den Wicklungen des Stators gemessen werden können,

d) Messen der Spannung der Gleichspannungsverbindung (4) gleichzeitig mit dem Messen von in den Wicklungen des Stators durch Drehung des Permanentmagnetrotors induzierten Strömen,

e) Schätzen der Statorfrequenz, und dadurch der Drehzahl des Rotors, und des Statorstromwinkels unter Verwendung der gemessenen Werte der Ströme in den Wicklungen des Stators, wobei der Statorstromwinkel unter Verwendung eines Phasenregelkreises (PLL) geschätzt wird mit einem Eingang einerseits der Werte der Ströme in den Wicklungen des Stators und andererseits eines Wertes der Geschwindigkeit des gemessenen Fahrzeugs,

f) Berechnen der Position der Permanentmagnete in dem Rotor in Bezug auf die Wicklungen des Stators unter Verwendung bekannter Parameter in der Form der Induktivität ($L_d$, $L_q$) und des Magnetflusses ($\Psi_M$) des Motors, des Statorstroms und der Spannung der Gleichspannungsverbindung, und

g) Starten des Konverters (3) durch Starten der Steuerung der Stromventile (9-14) davon, basierend auf Informationen über die berechnete Position und Geschwindigkeit des Rotors.

2. Verfahren nach Anspruch 1, **dadurch gekennzeichnet, dass** der Schritt f) eine Berechnung des Winkels des Statorstroms in Rotorkoordinaten und der Position der Permanentmagneten in Bezug auf die Wicklungen des Stators als die Differenz zwischen dem Statorstrom Winkel und dem Winkel dieses Stroms in Rotorkoordinaten umfasst.

3. Verfahren nach einem der vorhergehenden Ansprüche, **dadurch gekennzeichnet, dass** jedes Stromventil eine Halbleitervorrichtung in Form eines MOSFET, eines JFET oder eines IGBT (15) und eines Gleichrichterelements (16) in Form einer Diode, das antiparallel mit der Halbleitervorrichtung verbunden ist, umfasst.

4. Verfahren nach Anspruch 1 oder 2, **dadurch gekennzeichnet, dass** jedes Stromventil einen MOSFET oder einen JFET (15) umfasst und dass der als Synchrongleichrichter betriebene MOSFET oder JFET (15) das Gleichrichterelement (16) umfasst.

5. Verfahren nach einem der vorhergehenden Ansprüche, **dadurch gekennzeichnet, dass** die in den Wicklungen des Stators induzierten Ströme durch Messen der Ströme durch die Stromventile bestimmt werden.

6. Verfahren nach einem der vorhergehenden Ansprüche, **dadurch gekennzeichnet, dass** es an einer Antriebsanordnung ausgeführt wird, die konfiguriert ist, um eine Traktionskraft eines spurgebundenen Fahrzeugs (2) zu erzeugen.

7. Computerprogramm, umfassend einen Computerprogrammcode zum Bewirken eines Computers zum Implementieren eines Verfahrens nach einem der Ansprüche 1 bis 6, wenn der Computerprogrammcode in dem Computer ausgeführt wird.

8. Computerprogrammprodukt mit einem von einem Computer lesbaren Datenspeichermedium, in dem der Computerprogrammcode eines Computerprogramms nach Anspruch 7 auf dem Datenspeichermedium gespeichert ist.

9. Elektronische Steuereinheit eines Fahrzeugs, umfassend eine Ausführungseinrichtung, einen Speicher (34), der mit der Ausführungseinrichtung (33) verbunden ist, und ein Datenspeichermedium (36), das mit der Ausführungseinrichtung verbunden ist, und in dem der Computerprogrammcode eines Computerprogramms nach Anspruch 8 auf dem Datenspeichermedium (36) gespeichert ist.

10. Fahrzeug, wie ein spurgebundenes Fahrzeug, mit einer elektronischen Steuereinheit (32) nach Anspruch 9.

**Revendications**

1. Procédé pour démarrer un convertisseur de source de tension (3) utilisé pour convertir une tension continue en une tension alternative et, par là même, pour commander une alimentation électrique d'une liaison de tension continue (4) à un moteur à aimants permanents sans capteur (1) dans un véhicule dans un état où un rotor (R) dudit moteur pourvu d'aimants permanents est mis en rotation, ledit convertisseur ayant trois branches de phase (6 à 8) comprenant chacune une connexion en série d'au moins deux soupapes de courant (9 à 14), comprenant chacune un organe de redressement (16) avec le caractère d'une diode de redressement, un point milieu entre lesdites soupapes de courant de chaque branche de phase étant connecté soit chacun à un enroulement, soit à un point de connexion entre deux enroulements d'un stator (S) dudit moteur par l'intermédiaire d'un organe de déconnexion de moteur (23 à 25), un contacteur de séparation (5) connectant la liaison de tension continue (4) à une alimentation électrique étant maintenu ouvert lors de la réalisation du procédé et le procédé comprenant les étapes suivantes :

a) la fermeture desdits organes de déconnexion de moteur (23 à 25),

b) la mesure de courants du côté tension alternative dudit convertisseur, induits dans lesdits enroulements de stator par la rotation du rotor à aimant permanent (R) par rapport auxdits enroulements de stator et circulant à travers les organes de redressement (16) desdites soupapes de courant,

c) lorsqu'aucun courant ne peut être mesuré à l'étape b), l'abaissement de la tension de ladite liaison de tension continue (4) en déchargeant en partie au moins un condensateur (28) constituant ladite liaison de tension continue jusqu'à ce que des courants provenant desdits enroulements de stator puissent être mesurés,

d) la mesure de la tension de la liaison de tension continue (4) simultanément à la mesure de courants induits dans les enroulements de stator par la rotation du rotor à aimant permanent,

e) l'estimation de la fréquence de stator et, par là même, de la vitesse dudit rotor, et de l'angle de courant de stator en utilisant les valeurs des courants dans les enroulements de stator mesurés, dans lequel l'angle de courant de stator est estimé en utilisant une boucle à verrouillage de phase (PLL) avec une entrée d'une part desdites valeurs des courants dans les enroulements de stator et d'autre part d'une valeur de la vitesse du véhicule mesurée,

f) le calcul de la position des aimants permanents dans ledit rotor par rapport aux enroulements du stator en utilisant des paramètres connus sous la forme d'une inductance ($L_d$, $L_q$) et d'un flux magnétique ($\Psi_M$) du moteur, du courant de stator et de la tension de la liaison de tension continue, et

g) le démarrage du convertisseur (3) en démarrant la commande de ses soupapes de courant (9 à 14) de celui-ci sur la base des informations concernant la position et la vitesse du rotor calculées.

2. Procédé selon la revendication 1, **caractérisé en ce que** l'étape f) comprend un calcul de l'angle du courant de stator dans des coordonnées de rotor ainsi que de ladite position des aimants permanents par rapport aux enroulements du stator comme la différence entre l'angle de courant de stator et l'angle de ce courant dans des coordonnées de rotor.

3. Procédé selon l'une quelconque des revendications précédentes, **caractérisé en ce que** chaque soupape de courant comprend un dispositif à semi-conducteur sous la forme d'un MOSFET, d'un JFET ou d'un IGBT (15) et un organe de redressement (16) sous la forme d'une diode connectée en antiparallèle audit dispositif à semi-conducteur.

4. Procédé selon la revendication 1 ou 2, **caractérisé en ce que** chaque soupape de courant comprend un MOSFET ou un JFET (15) et **en ce que** ledit MOSFET ou JFET (15) fonctionnant comme un redresseur synchrone comprend ledit organe de redressement (16).

5. Procédé selon l'une quelconque des revendications précédentes, **caractérisé en ce que** les courants induits dans les enroulements de stator sont déterminés par la mesure des courants à travers les soupapes de courant.

6. Procédé selon l'une quelconque des revendications précédentes, **caractérisé en ce qu'**il est réalisé sur un agencement d'entraînement configuré pour générer une force de traction d'un véhicule guidé sur rails (2).

7. Programme d'ordinateur comprenant un code de programme d'ordinateur pour amener un ordinateur à implémenter un procédé selon l'une quelconque des revendications 1 à 6 lorsque le code de programme d'ordinateur est exécuté sur l'ordinateur.

8. Produit-programme d'ordinateur comprenant un support de stockage de données lisible par un ordinateur, dans lequel le code de programme d'ordinateur d'un programme d'ordinateur selon la revendication 7 est stocké dans le support de stockage de données.

9. Unité de commande électronique d'un véhicule comprenant un moyen d'exécution, une mémoire (34) connectée au moyen d'exécution (33) et un support de stockage de données (36) connecté au moyen d'exécution, dans laquelle le code de programme d'ordinateur d'un programme d'ordinateur selon la revendication 8 est stocké dans ledit support de stockage de données (36).

10. Véhicule, tel qu'un véhicule guidé sur rails, comprenant une unité de commande électronique (32) selon la revendication 9.

Fig 1

Fig 2

Fig 3

Fig 4

**EP 2 860 870 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2573934 A1

- EP 2075907 A1